# EUROPEAN PATENT APPLICATION

(11) **EP 4 520 557 A1**
(43) Date of publication of application: **12.03.2025**
(21) Application number: 23195650.9
(22) Date of filing: 06.09.2023
(51) Int. Cl.: B60H 1/00, B60K 11/02

(54) **A THERMAL MANAGEMENT MODULE FOR A VEHICLE**

(71) Applicant: VALEO SYSTEMES THERMIQUES, 78320 Le Mesnil Saint-Denis (FR)
(72) Inventor: LIPOWSKI, Mateusz, 32 050 Skawina (PL); POTOK, Dariusz, 32 050 Skawina (PL); NOWAKOWSKI, Adrian, 32 050 Skawina (PL); GUT, Damian, 32 050 Skawina (PL); MACHUL, Krzysztof, 32 050 Skawina (PL)
(74) Representative: Valeo Systèmes Thermiques

(57) **Abstract**

A thermal management module (200) for a vehicle is disclosed, including a fluid hub (202) comprising a chamber (204) to receive a valve mechanism (206); one or more fluid pumps (208-1, 208-2) configured in fluidic connection with the fluid hub (202); and at least one heat exchanger (210) configured with the fluid hub (202). The fluid hub (202) comprises a housing body (212) having one or more fluid loops (214), and at least one cover plate (216) adapted to cover at least one of the one or more fluid loops (214) of the housing body (212).

## Description

### FIELD OF INVENTION

The present invention relates to heat management systems in vehicles. More specifically, the present invention relates to an improved and efficient thermal management module for the vehicles, such as electric and/or hybrid vehicles.

### BACKGROUND

As is well known that thermal management systems are used in vehicles to regulate heat flows inside the vehicles in order to ensure operation of the vehicle components in their respective optimal temperature range while ensuring the passenger comfort in the cabin. Particularly, in the electric vehicle a thermal management module is used for management of heat from drive units, such as electric motors, the power electronics and the batteries and/or to keep these components at right temperature.

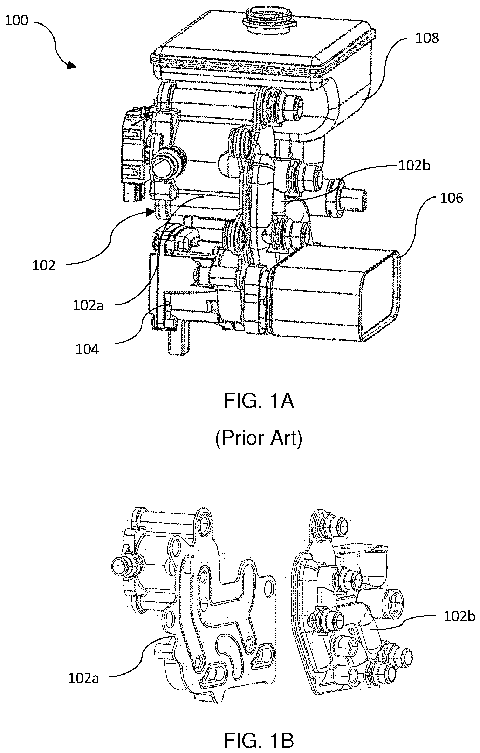

A conventional thermal management module 100, such as one shown in FIG. 1A and FIG. 1B, includes a fluid hub 102, one or more heat exchangers, such as a chiller, 106, one or more fluid pumps 104, and a surge tank 108. The chiller 106, fluid pumps 104 and the surge tank 108 are configured on the fluid hub 102. A housing of the fluid hub 102 is generally formed by two plastic components 102a and 102b, wherein at least one of the two plastic housing components 102a and 102b is configured with channels that define the fluid flow passages when the two plastic housing components 102a and 102b are joined. The fluid hub includes assembling points/mounting holes on at least one of the two plastic housing components 102a and 102b for mounting the fluid hub 102 on the vehicle frame. The fluid hub 102 further includes at least one valve controlled by a controller to selectively disrupt and/or regulate fluid flow through the fluid flow passages for regulating fluid supply to the vehicle heat exchangers 106, and other vehicle components. The fluid hub 102 receives fluid stored in the surge tank 108 and selectively supplies fluid to the heat exchanger 106 based on the operative configuration of the valve in the fluid hub 102.

However, the two plastic housing components 102a and 102b of the housing of the fluid hub 102 are joined together by plastic welding process which is very complex to perform and one of the most vulnerable in terms of process parameters, such as temperature, pressure, injection parameters, dimensions of components to be joined, humidity, and the like, and its impact on final mechanical resistance of the fluid hub. Further, joining of the plastic components by the plastic welding process requires additional machine park dedicated for particular design concept of the housing components, which increases the manufacturing cost.

Therefore, there is need for an efficient and cost-efficient solution that can overcome the abovementioned drawbacks of the conventional fluid hub and/or thermal management module.

### SUMMARY

The present invention discloses an improved and efficient thermal management module for vehicles, such as electric and/or hybrid vehicles.

In accordance with an embodiment of the present invention, the disclosed thermal management module includes a fluid hub comprising a chamber to receive a valve mechanism, one or more fluid pumps configured in fluidic connection with the fluid hub, and at least one heat exchanger configured with the fluid hub. The fluid hub comprises a housing body having one or more fluid loops, and at least one cover plate adapted to cover at least one of the one or more fluid loops of the housing body.

In an embodiment, the housing body is made of a polymeric material.

In an embodiment, the cover plate is made of a metallic material, such as but not limited to aluminum.

In an embodiment, the cover plate and the housing body can be coupled to each other together through fasteners.

In an embodiment, a portion of the cover plate can be coupled to a first side plate of the heat exchanger through any or a combination of brazing and welding.

In another embodiment, the cover plate can be integrated with a first side plate of the heat exchanger.

In addition, the housing body is coupled to a second side plate of the heat exchanger through at least one mounting leg protruded from the housing body and at least one mounting bolt screwed through mounting holes of the mounting leg and a mounting block secured on the heat exchanger. The second side plate is positioned on a side opposite to that of the first side plate.

The housing body comprises a first housing portion defining the chamber to accommodate the valve mechanism and fluidically connected to a surge tank through a first conduit, a second housing portion fluidically connected to the first housing portion through a second conduit, and a third housing portion fluidically connected to the first housing portion through a third conduit.

The second housing portion and the third housing portion are configured to receive the one or more fluid pumps. The second housing portion and the third housing portion are configured on two opposite sides of the first housing portion.

Each of the second housing portion and the third housing portion comprises at least one fluid connection terminal.

In an embodiment, the second housing portion can be fluidically connected to the heat exchanger through a tube.

In another embodiment, the cover plate can include a water box adapted to fluidically connect the second housing portion to the heat exchanger.

In an embodiment, the housing body comprises one or more first fluid connectors projected outside of the housing body.

In an embodiment, the cover plate comprises one or more second fluid connectors connected to the fluid loops of the housing body and projected outside from the cover plate.

In an embodiment, the thermal management module further comprises brackets secured to the heat exchanger to mount the thermal management module on a vehicle frame. Each of the brackets comprises a mounting hole with an anti-vibration grommet.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### BRIEF DESCRIPTION OF DRAWINGS

Other characteristics, details and advantages of the invention may be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1A illustrates a conventional thermal management module;
FIG. 1B illustrates an exploded view of a fluid hub's housing of the conventional thermal management module of FIG. 1A;
FIG. 2 illustrates an isometric view of a thermal management module in accordance with an embodiment of the present invention;
FIG. 3 illustrates an exploded view of the thermal management module of FIG. 2;
FIG. 4 illustrates a rear view of the thermal management module of FIG. 2;
FIG. 5 illustrates a rear view of the thermal management module showing a valve accommodated in a housing;
FIG. 6 illustrates a front view of a housing body of the thermal management module of FIG. 2;
FIG. 7 illustrates a rear view of the housing body of the thermal management module of FIG. 2;
FIG. 8 illustrates a surge tank of the thermal management module of FIG. 2;
FIG. 9 illustrates a thermal management module with a stepped cover plate in accordance with an embodiment of the present invention;
FIG. 10 illustrates the stepped cover plate of thermal management module of FIG. 9;
FIG. 11 illustrates a thermal management module with a cover plate integrated with a side plate of a heat exchanger in accordance with an embodiment of the present invention;
FIG. 12 illustrates the cover plate integrated with the side plate of the heat exchanger of thermal management module of FIG. 11;
FIG. 13 illustrates a thermal management module with a cover plate having a water box in accordance with an embodiment of the present invention; and
FIG. 14 illustrates an exploded view of the thermal management module with the cover plate with the water box.

### DETAILED DESCRIPTION

It must be noted that the figures disclose the invention in a detailed enough way to be implemented, said figures helping to better define the invention if needs be. The invention should however not be limited to the embodiment disclosed in the description.

Embodiments of the present invention, explained in the forthcoming description and the accompanying drawings, relate to a simple and efficient thermal management module for motor vehicles, such as electric and/or hybrid vehicles. A fluid hub/coolant hub of the thermal management module includes a housing body having one or more fluid loops, and a cover plate adapted to cover at least one of the one or more fluid loops of the housing body, which can obviate the drawbacks of the conventional fluid hub having two plastic housing components that are connected through the complex plastic welding process. Thus, the disclosed thermal management module eliminate the need of second housing main plastic component therefore eliminating the need of complex plastic welding process as well as specific tools and/or machines required for the complex plastic welding, resulting in reduction of manufacturing cost and the manufacturing time. In addition, the size/volume of the fluid hub is reduced which require less space for packaging and less coolant/fluid volume is required for same functionality of the conventional fluid hub.

Although, embodiments of the present invention are explained with an example of a thermal management module for the vehicles, however, the concept of the present invention or the thermal management module of present invention is applicable for use in vehicular as well as non-vehicular environment, and all such applications are within scope of the present invention without any limitations whatsoever.

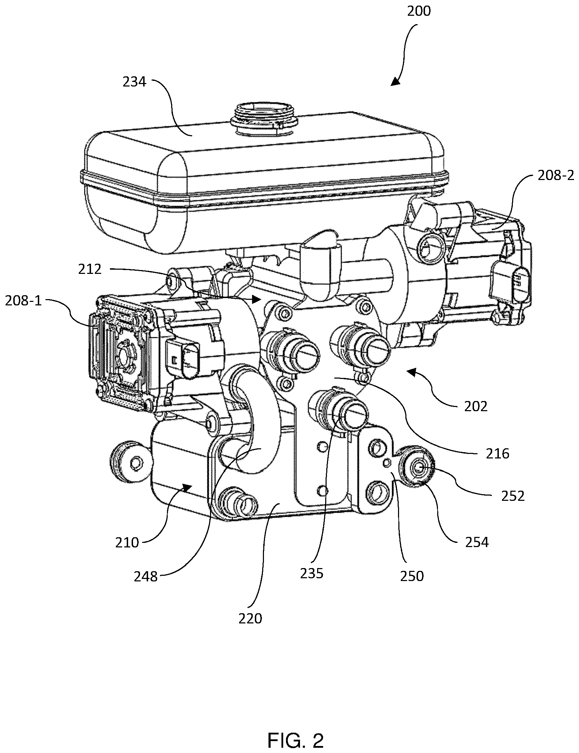

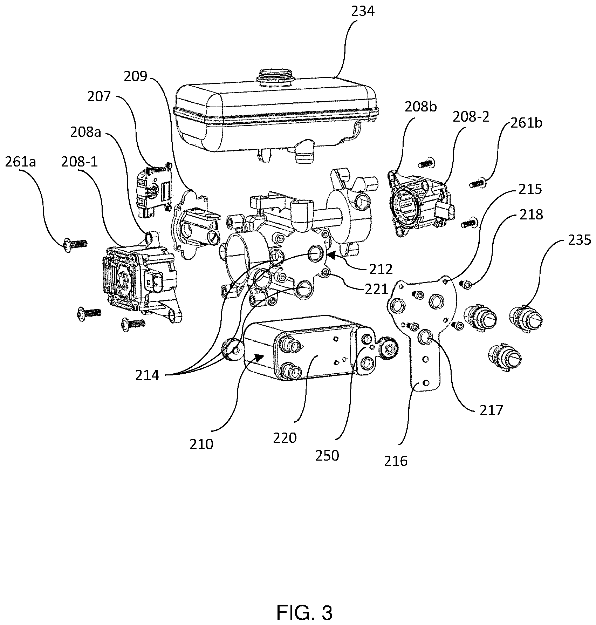

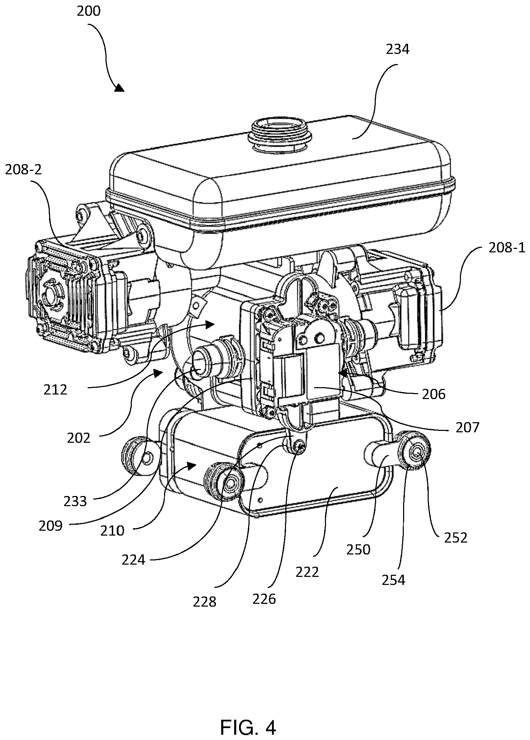

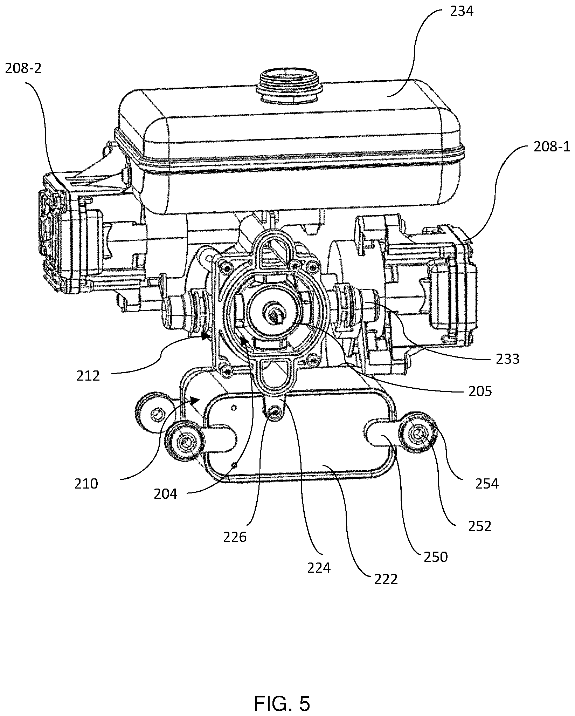

Referring to FIG. 2 to FIG. 5, in accordance with an embodiment, the present invention discloses a thermal management module 200 includes a fluid hub 202, one or more fluid pumps, such as pumps 208-1 and 208-2, configured in fluidic connection with the fluid hub 202, at least one heat exchanger, such as a chiller 210, configured with the fluid hub 202. The fluid hub 202 comprises a housing body 212 having one or more fluid loops 214, and a cover plate 216 adapted to cover at least one of the one or more fluid loops 214 of the housing body 212. The fluid loops 214 can be internal fluid passages defined in the housing body 212. The housing body 212 comprises a first housing portion 232 defining a chamber 204 to receive and accommodate a valve 205 of a valve mechanism 206. For instance, the valve mechanism 206 can be a multiway solenoid valve mechanism that can direct/regulate flow of the fluid/coolant received in the chamber 204 between several fluid loops and/or the heat exchanger 210. Generally, the valve 205 is controlled by a control unit/actuator 207 of the valve mechanism 206 and is adapted to selectively regulate fluid flow through the internal fluid flow passages/fluid loops 214. The valve actuator 207 is mounted on the housing body through a valve cover 209.

In addition, the housing body 212 is made of a polymeric material. For instance, the housing body 212 can be made of one or more plastics, thermoplastic material, a duroplastic material, a compound material, such as a thermoplastic and duroplastic compound material, at least one polypropylene material and/or at least one polyamide material. Besides, the cover plate 216 is made of a metallic material, such as aluminum and/or aluminum alloys.

In an embodiment, a portion, for instance the wider and/or upper portion, of the cover plate 216 is coupled to the housing body 212 through fasteners 218 and seals. The cover plate 216 is provide with mounting holes 215. For instance, the fasteners 218 can be threaded bolts extended through the mounting holes 215 of the cover plate 216 and the corresponding holes 221 on the housing body 212. Further, another portion, for instance a lower portion, of the cover plate 216 can be coupled to a first side plate 220 of the heat exchanger 210 through any or a combination of brazing and welding.

In addition, the housing body 212 is coupled to a second side plate 222 of the heat exchanger 210 through a mounting leg 224 protruded from the housing body 212 and a mounting bolt 226 screwed through mounting holes of the mounting leg 224 and a mounting block 228 secured on the heat exchanger 210. The second side plate 222 is positioned on a side opposite to that of the first side plate 220. Thus, the fluid hub 202 is secured to the heat exchanger 210 from two opposite sides.

Besides, the housing body 212 includes one or more first fluid connectors 233 projected outside of the housing body 212. The first fluid connectors 233 can be fluidically connected to at least one of the fluid loops 214 of the housing body 212. For instance, the housing body 212 is made through the injection molding process.

Further, the cover plate 216 comprises one or more second fluid connectors 235 fluidically connected to at least one of the fluid loops 214 of the housing body 212 and projected outside from the cover plate 216. The second fluid connectors 235 are fluidically connected to the fluid loops 214 though the openings 217 provided in the cover plate 216. The second fluid connectors 235 are also made of metallic material. For instance, the second fluid connectors 235 are made of same material of the cover plate 216. The second fluid connectors 235, also called quick connectors, can be quickly connected with a hose/pipe. The second fluid connectors 235 can be welded and/or brazed to the cover plate 216. The second fluid connectors 235 formed on the cover plate 216 reduce the plastic injection process limitations, for instance demolding process, for the housing body 212. In addition, the second fluid connectors 235 of metallic material facilitate higher flexibility for the second fluid connectors design. For instance, second fluid connectors 235 can have bend/irregular shape/design and can be secured to the cover plate 216 at any specific angle with the cover plate 216 based on requirement.

Furthermore, brackets 250 are provided with the heat exchanger 210 to mount the thermal management module 200 on a vehicle frame. Each of the brackets 250 includes a mounting hole 252 and an anti-vibration grommet/rubber vibration damper 254. Thus, the heat exchanger 210 acts as a structural element of the housing body 212.

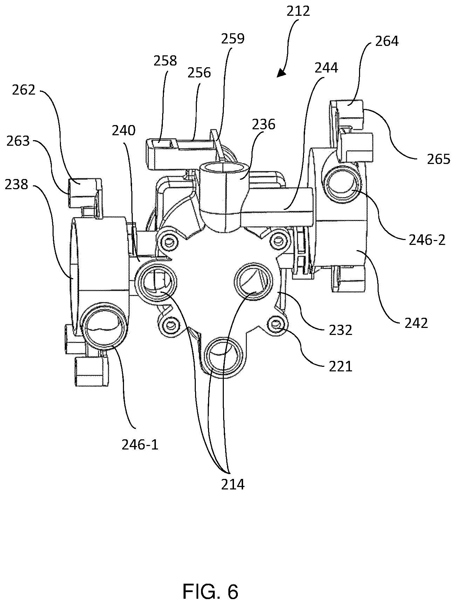

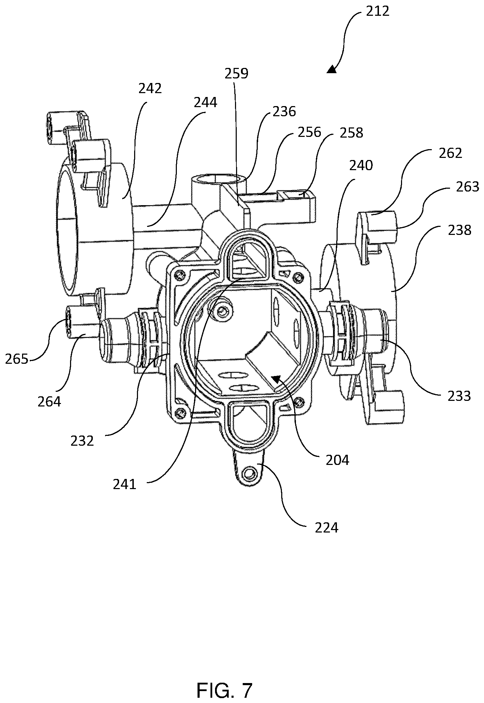

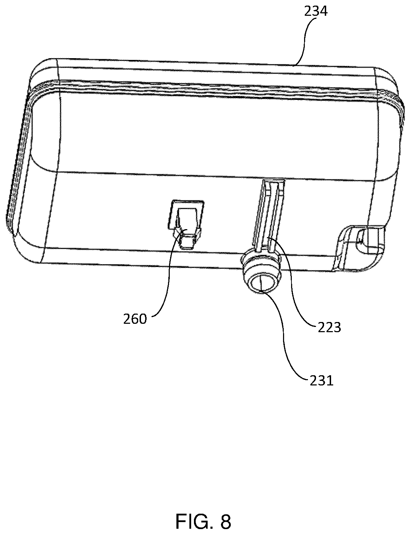

Referring to FIG. 6 to FIG. 8, the first housing portion 232 is fluidically connected to a surge tank 234 through a first conduit 236 that receive a fluid connector 231 protruded from the surge tank 234. More specifically, the first housing portion 232 receives fluid stored in the surge tank 234 and selectively supplies fluid to the heat exchanger 210 and/or other components of the vehicle based on the operative configuration of the valve 205 and/or valve mechanism 206 of the fluid hub 202. In addition, a first mounting arm 256 is protruded from the first housing portion 232 to detachably secure the surge tank 234 to the first housing portion 232. The first mounting arm 256 comprises an opening 258 to detachably engage with a locking hook 260 protruded from the surge tank 234. For instance, the locking hook 260 and the first mounting arm 256 can be in snap locking connection. Besides, a mounting plate 259 is protruded from the first housing portion 232, particularly from an outer surface of a fluid inlet passage 241. When the surge tank 234 is fitted on the housing body 212, the mounting plate 259 is received in the groove 223 provided on the surge tank 234.

In addition, the fluid inlet passage 241 is configured in fluidic connection with the chamber 204 and the first conduit 236. The housing body 212 further includes a second housing portion 238 fluidically connected to the first housing portion 232 through a second conduit 240, and a third housing portion 242 fluidically connected to the first housing portion 232 through a third conduit 244. The second housing portion 238 and the third housing portion 242 are configured on two opposite sides of the first housing portion 232 along a first axis, called the transverse axis, of the housing body 212. The second housing portion 238 is configured to receive the fluid pump 208-1, and the third housing portion 242 is configured to receive the fluid pump 208-2. The pumps 208-1 and 208-2 can be radial pumps.

In another embodiment, the second housing portion 238 and the third housing portion 242 can be configured on same side.

In addition, one or more second mounting arms 262 are protruded from the second housing portion 238 to detachably secure the respective fluid pump 208-1 to the second housing portion 238. Each of the second mounting arms 262 comprises a mounting hole 263. Threaded bolts 261a are screwed through corresponding mounting holes 208a in the pump 208-1 and the mounting holes 263 in the second mounting arms 262 to secure the pump 208-1 to the second housing portion 238. Similarly, one or more third mounting arms 264 are protruded from the third housing portion 242 to detachably secure the respective fluid pump 208-2 to the third housing portion 242. Each of the third mounting arms 264 comprises a mounting hole 265. Threaded bolts 261b are screwed through the mounting holes 208b in the pump 208-2 and the mounting holes 265 of the third mounting arms 264 to secure the pump 208-2 to the third housing portion 242.

In addition, the housing body 212 further includes fluid connection terminals 246-1 and 246-2, external to the housing body 212, on the second housing portion 238 and the third housing portion 242. The second housing portion 238 is fluidically connected to the fluid connection terminal 246-1 and the third housing portion 242 is fluidically connected to the fluid connection terminal 246-2. The fluid connection terminals 246-1 and 246-2 can be used for the inlet or outlet of the pumps 208-1 and 208-2.

In an embodiment, the second housing portion 238 can be fluidically connected to the heat exchanger 210 through a tube 248, as shown in FIG. 2. The tube 248 can be connected between the fluid connection terminal 246-1 and a fluid connection terminal of the heat exchanger 210.

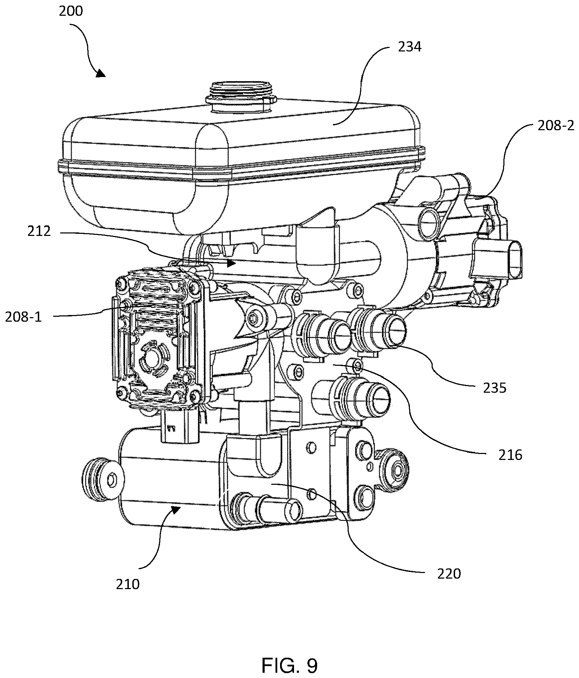

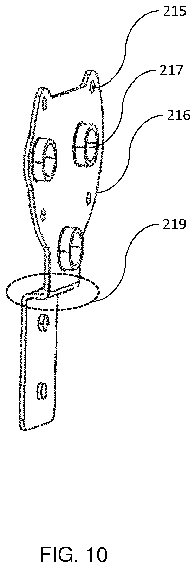

Referring to FIG. 9 and FIG. 10, the cover plate 216 can be a stepped plate having a bent portion 219. The bent portion/stepped portion 219 allows the cover plate 216 to properly abuts, at its both opposite end portions, to the housing body 212 and the heat exchanger 210 when the side portion of the housing body 212 is extended beyond the first side plate 220.

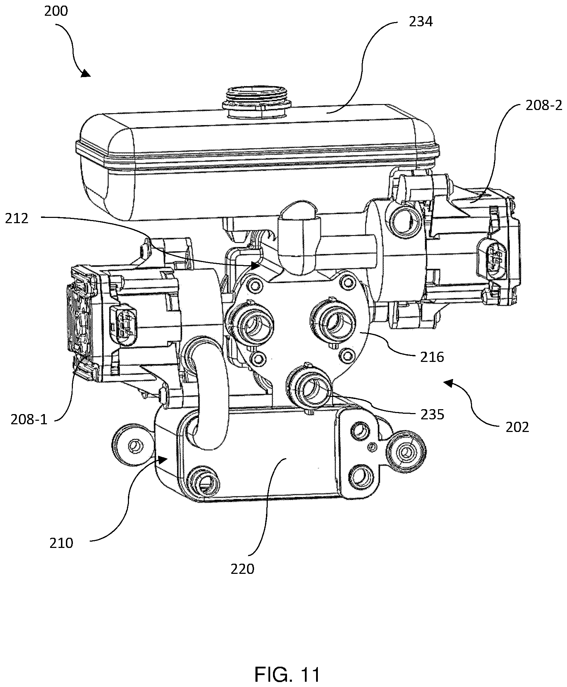

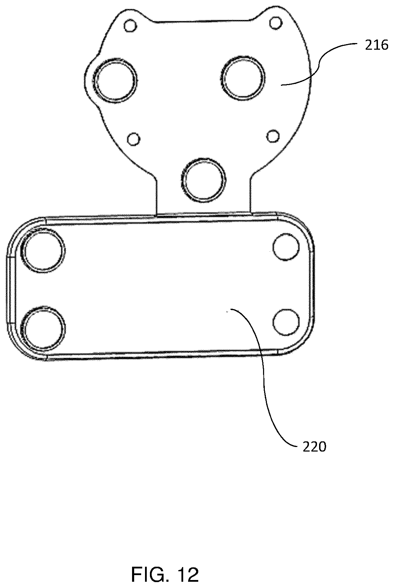

Referring to FIG. 11 and FIG. 12, the cover plate 216 can be integrated with the first side plate 220 of the heat exchanger 210. For instance, the cover plate 216 and the first side plate 220 are a single element. Thus, the heat exchanger 210 is not used only as a structural element of the fluid hub housing for using natural heat exchanger stiffness but also as the cover of the housing body 212 for covering the fluid loops 214.

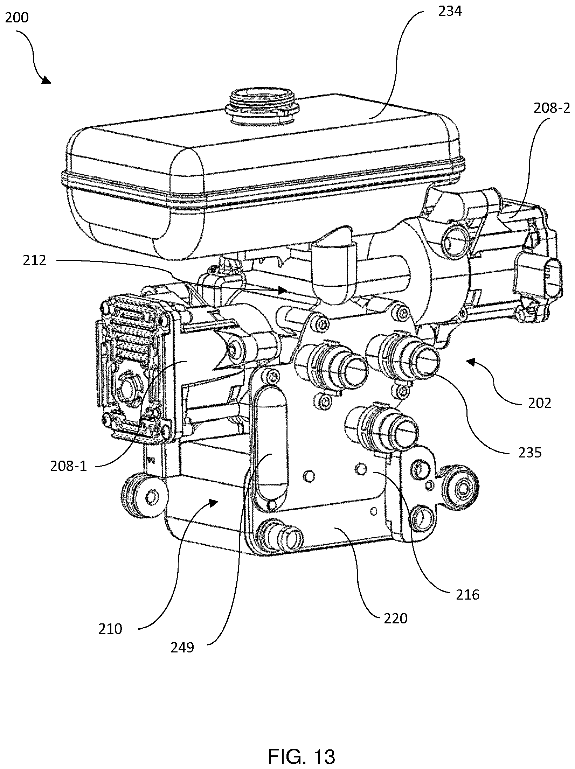

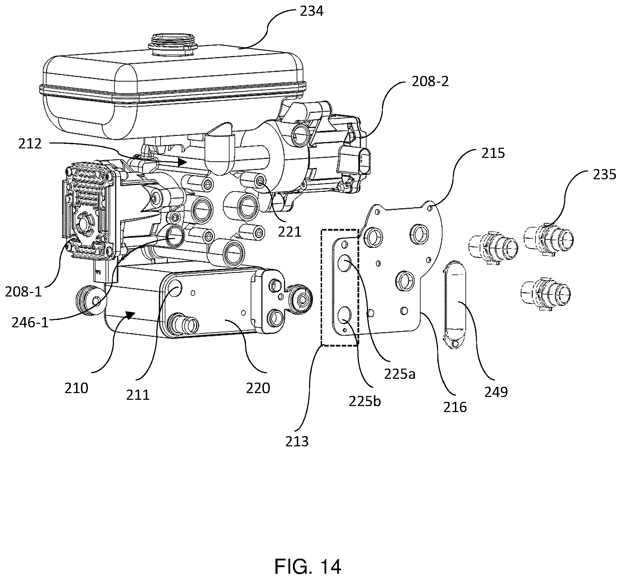

Referring to FIG. 13 and FIG. 14, the cover plate 216 can include a water box 249 on an extended portion 213 of the cover plate 216. The extended portion 213 includes spaced openings 225a and 225b corresponding to the fluid connection terminals 246-1 and the fluid connection opening 211 of the heat exchanger 210. The water box 249 is adapted to fluidically connect the second housing portion 238 to the heat exchanger 210 through the openings 225a and 225b. The water box 249 can be welded and/or brazed to the cover plate 216.

In any case, the invention cannot and should not be limited to the embodiments specifically described in this document, as other embodiments might exist. The invention shall spread to any equivalent means and any technically operating combination of means.

## Claims

1. A thermal management module (200) comprising:
a fluid hub (202) comprising a chamber (204) to receive a valve mechanism (206);
one or more fluid pumps (208-1, 208-2) configured in fluidic connection with the fluid hub (202); and
at least one heat exchanger (210) configured with the fluid hub (202);
wherein the fluid hub (202) comprises a housing body (212) having one or more fluid loops (214), and at least one cover plate (216) adapted to cover at least one of the one or more fluid loops (214) of the housing body (212).

2. The thermal management module (200) as claimed in the preceding claim, wherein the housing body (212) is made of a polymeric material.

3. The thermal management module (200) as claimed in any of the preceding claims, wherein the cover plate (216) is made of a metallic material.

4. The thermal management module (200) as claimed in any of the preceding claims, wherein the cover plate (216) and the housing body (212) are coupled together through fasteners (218).

5. The thermal management module (200) as claimed in any of the preceding claims, wherein a portion of the cover plate (216) is coupled to a first side plate (220) of the heat exchanger (210) through any or a combination of brazing and welding.

6. The thermal management module (200) as claimed in any of the preceding claims, wherein the cover plate (216) is integrated with a first side plate (220) of the heat exchanger (210).

7. The thermal management module (200) as claimed in any of the preceding claims, wherein the housing body (212) is coupled to a second side plate (222) of the heat exchanger (210) through at least one mounting leg (224) protruded from the housing body (212) and at least one mounting bolt (226) screwed through mounting holes of the mounting leg (224) and a mounting block (228) secured on the heat exchanger (210), and wherein the second side plate (222) is positioned on a side opposite to that of the first side plate (220).

8. The thermal management module (200) as claimed in any of the preceding claims, wherein the housing body (212) comprises a first housing portion (232) defining the chamber (204) to accommodate the valve mechanism (206) and fluidically connected to a surge tank (234) through a first conduit (236), a second housing portion (238) fluidically connected to the first housing portion (232) through a second conduit (240), and a third housing portion (242) fluidically connected to the first housing portion (232) through a third conduit (244).

9. The thermal management module (200) as claimed in any of the preceding claims, wherein the second housing portion (238) and the third housing portion (242) are configured to receive the one or more fluid pumps (208-1, 208-2), and wherein the second housing portion (238) and the third housing portion (242) are configured on two opposite sides of the first housing portion (232).

10. The thermal management module (200) as claimed in any of the preceding claims, wherein each of the second housing portion (238) and the third housing portion (242) comprises at least one fluid connection terminal (246-1, 246-2).

11. The thermal management module (200) as claimed in any of the preceding claims, wherein the second housing portion (238) is fluidically connected to the heat exchanger (210) through a tube (248).

12. The thermal management module (200) as claimed the preceding claim, wherein the cover plate (216) comprises a water box (249) adapted to fluidically connect the second housing portion (238) to the heat exchanger (210).

13. The thermal management module (200) as claimed in any of the preceding claims, wherein the housing body (212) comprises one or more first fluid connectors (233) projected outside of the housing body (212).

14. The thermal management module (200) as claimed in any of the preceding claims, wherein the cover plate (216) comprises one or more second fluid connectors (235) connected to the fluid loops (214) of the housing body (212) and projected outside from the cover plate (216).

15. The thermal management module (200) as claimed in any of the preceding claims further comprises brackets (250) secured to the heat exchanger (210) to mount the thermal management module (200) on a vehicle frame, wherein each of the brackets (250) comprises a mounting hole (252) with an anti-vibration grommet (254).
